# EUROPEAN PATENT APPLICATION

(11) **EP 3 819 880 A1**
(43) Date of publication of application: **12.05.2021**
(21) Application number: 19909972.2
(22) Date of filing: 18.03.2019
(51) Int. Cl.: G07F 7/06

(54) **RECYCLABLE CONTAINER CIRCULATION METHOD AND DEVICE EMPLOYING SMART CONTROL**

(30) Priority: 15.01.2019 CN 201910035978
(71) Applicant: Guangzhou Geli Network Technology Co.,Ltd., Guangzhou, Guangdong 510160 (CN)
(72) Inventor: LI, Junmian, Guangzhou Guangdong 510160 (CN); ZHOU, Hushun, Guangzhou Guangdong 510160 (CN)
(74) Representative: Petraz, Gilberto Luigi
(86) International application number: PCT/CN2019/078460
(87) International publication number: WO 2020/147189

(57) **Abstract**

The present invention discloses a method and apparatus for intelligently controlling circulation of a recyclable container. The method includes: detecting whether a container return verification request is received, the container return verification request being triggered when an owner needs to return a recyclable target container, and the container return verification request including container parameters used for identifying type data of the target container; when the container return verification request is received, verifying the type data identified according to the container parameters; when the verification succeeds, detecting whether the target container is placed at a specified recycling position; and when a detection result is yes, calculating a target guarantee deposit matched with the type data, and granting the target guarantee deposit to the owner. Therefore, implementation of the present invention can provide an intelligent recycling method for the recyclable container, which is favorable for strengthening the awareness of returning the recyclable container, and then can reduce the pollution, caused by the fact that a container is thrown away or is not recycled in time, to the environment.

## Description

### Field of the invention

The present invention relates to the technical field of Internet, and more particularly relates to a method and apparatus for intelligently controlling circulation of a recyclable container.

### Background of the invention

In actual life, most people do not have the habit of carrying drinking glasses with them. When people are thirsty, they need to buy beverages, such as mineral water, coffee, cola and sprite from convenience stores, supermarkets, self-service vending machines and other places. As the pace of people's lives accelerates, the beverages also have become consumables in great consumption. According to different materials, beverage bottles containing beverages can be divided into plastic bottles, glass bottles, aluminum cans, and the like. Practice has found that after drinking all the beverage, people habitually put the beverage bottles into trash cans, and some people even throw them away directly. The environment will be polluted if the beverage bottles (especially the plastic bottles) placed in the trash cans or thrown away are not cleaned immediately. It can be seen that it is particularly important to provide a recycling method for recyclable containers.

### Summary of invention

The technical problem to be solved by the present invention is to provide a method and apparatus for intelligently controlling circulation of a recyclable container, and an intelligent recycling method for a recyclable container can be provided, which is favorable for strengthening the awareness of returning the recyclable container to reduce the pollution, caused by the fact that a container is thrown away or is not recycled in time, to the environment.

In order to solve the above technical problem, a first aspect of the embodiments of the present invention discloses a method for intelligently controlling circulation of a recyclable container. The method includes:
detecting whether a container return verification request is received, wherein the container return verification request is triggered when an owner needs to return a target container, the target container is a recyclable container, and the container return verification request includes container parameters used for identifying type data of the target container;
when the container return verification request is received, identifying, according to the container parameters, the type data, and verifying the type data; when the verification succeeds, detecting whether the target container is placed at a specified recycling position; and when the target container is detected to be placed at the specified recycling position, calculating a target guarantee deposit matched with the type data, and granting the target guarantee deposit to the owner.

As an optional implementation mode, in the first aspect of the embodiments of the present invention, the container parameters include at least one of the shape of the target container, the weight of the target container, the size of the target container, the volume of the target container, the material of the target container, the brand logo of the target container, the unique identifier of the target container, the type integrity of the target container, and embedded data of the target container.

As an optional implementation mode, in the first aspect of the embodiments of the present invention, before granting the target guarantee deposit to the owner, the method further includes:
acquiring face data of the owner, and determining whether certain face data matched with the face data of the owner is present in a pre-stored face database; and when the certain face data is determined to be present in the face database, triggering the operation of granting the target guarantee deposit to the owner, wherein the face database is configured to store all pieces of face data of bound accounts, and each piece of face data corresponds to at least one bound account;
the step of granting the target guarantee deposit to the owner includes:
   granting the target guarantee deposit to one of the bound accounts corresponding to the certain face data matched with the face data of the owner;
   and the method further includes:
      when the certain face data is not present, adding the face data of the owner and the determined at least one account of the owner into the face database to realize binding between the face data of the owner and the at least one account of the owner, and triggering the operation of granting the target guarantee deposit to the owner, wherein the at least one account of the owner is a bound account corresponding to the face data of the owner.

As an optional implementation mode, in the first aspect of the embodiments of the present invention, the method further includes:
when the target container is determined to be placed at the specified recycling position, updating a current return state of the target container to a recycled to-be-cleaned state;
and after receiving the container return verification request, and before identifying, according to the container parameters, the type data, the method further includes:
   determining, according to the container parameters, the current return state of the target container, and determining whether the current return state of the target container is a to-be-recycled state; and when the current return state of the target container is the to-be-recycled state, triggering the operation of identifying, according to the container parameters, the type data.

As an optional implementation mode, in the first aspect of the embodiments of the present invention, after receiving the container return verification request, and before identifying, according to the container parameters, the type data, the method further includes:
determining, according to the container parameters, a latest determined state of the target container, determining whether the latest determined state denotes that the target container has been supplied to a consumer, and when the latest determined state is determined to denote that the target container has been supplied to the consumer, triggering the operation of identifying, according to the container parameters, the type data;
The method further includes:
   when the latest determined state is determined to not denote that the target container has been supplied to the consumer, acquiring source information of the target container supplied by the owner, and transmitting the source information to a product manufacturer corresponding to the target container and/or a container manufacturer corresponding to the target container.

As an optional implementation mode, in the first aspect of the embodiments of the present invention, after calculating the target guarantee deposit matched with the type data, the method further includes:
determining, according to the container parameters, a manufacturer account corresponding to the target container, wherein the manufacturer account is at least one of an account corresponding to the product manufacturer corresponding to the target container and an account corresponding to a distributor that conducts sales/renting activities on the target container;
deducting the target guarantee deposit and/or a return service fee for the target container from the manufacturer account.

As an optional implementation mode, in the first aspect of the embodiments of the present invention, after the target container is detected to be placed at the specified recycling position, the method further includes:
determining, according to the type parameters, a return type that the owner returns the target container, wherein the return type is an after-use return type or not-use return type, the after-use return type is configured to denote that the owner rents the target container in a renting manner or uses the target container by purchasing goods accommodated in the target container, and the not-use return type denotes that the owner neither rents the target container in the renting manner, nor uses the target container by purchasing the goods accommodated in the target container;
determining, according to the return type, a guarantee deposit calculation mode matched with the return type;

wherein the step of calculating the target guarantee deposit matched with the type data includes:
calculating, according to the guarantee deposit calculation mode matched with the return type, the target guarantee deposit matched with the type data.

A second aspect of the embodiments of the present invention discloses an apparatus for intelligently controlling circulation of a recyclable container. The apparatus includes:
a first detection module, configured to detect whether a container return verification request is received, wherein the container return verification request is triggered when an owner needs to return a target container, the target container is a recyclable container, and the container return verification request includes container parameters used for identifying type data of the target container;
an identification module, configured to identify, according to the container parameters, the type data when the first detection module detects that the container return verification request is received;

a verification module, configured to verify the type data;
a second detection module, configured to detect whether the target container is placed at a specified recycling position when the verification module successfully verifies the type data;
a calculation module, configured to calculate a target guarantee deposit matched with the type data when the second detection module detects that the target container is placed at the specified recycling position;
a granting module, configured to grant the target guarantee deposit to the owner.

As an optional implementation mode, in the second aspect of the embodiments of the present invention, the container parameters include at least one of the shape of the target container, the weight of the target container, the size of the target container, the volume of the target container, the material of the target container, the brand logo of the target container, the unique identifier of the target container, the type integrity of the target container, and embedded data of the target container.

As an optional implementation mode, in the second aspect of the embodiments of the present invention, the apparatus further includes:
an acquisition module, configured to acquire face data of the owner before the granting module grants the target guarantee deposit to the owner;
a first judgment module, configured to determine whether certain face data matched with the face data of the owner is present in a pre-stored face database; and when the certain face data is determined to be present in the face database, trigger the granting module to execute the operation of granting the target guarantee deposit to the owner, wherein the face database is configured to store all pieces of face data of bound accounts, and each piece of face data corresponds to at least one bound account;
wherein a mode for granting the target guarantee deposit to the owner by the granting module is specifically to:
   grant the target guarantee deposit to one of the bound accounts corresponding to the certain face data matched with the face data of the owner;
   an adding module, configured to add the face data of the owner and the determined at least one account of the owner into the face database to realize binding between the face data of the owner and the at least one account of the owner when the first judgment module determines that the certain face data is not present in the face database, and trigger the granting module to execute the operation of granting the target guarantee deposit to the owner, wherein the at least one account of the owner is a bound account corresponding to the face data of the owner.

As an optional implementation mode, in the second aspect of the embodiments of the present invention, the apparatus further includes:
an updating module, configured to update a current return state of the target container to a recycled to-be-cleaned state after the second detection module detects that the target container is placed at the specified recycling position;
a first determination module, configured to determine, according to the container parameters, a current return state of the target container after the first detection module detects that the container return verification request is received;
a second judgment module, configured to determine whether the current return state of the target container is a to-be-recycled state;
the identification module is specifically configured to identify, according to the container parameters, the type data when the first detection module detects that the container return verification request is received and when the second judgment module determines that the current return state of the target container is the to-be-recycled state.

As an optional implementation mode, in the second aspect of the embodiments of the present invention, the apparatus further includes:
a state determination module, configured to determine, according to the container parameters, a latest determined state of the target container after the first detection module detects that the container return verification request is received;
the identification module is specifically configured to identify, according to the container parameters, the type data when the first detection module detects that the container return verification request is received and when the latest determined state determined by the state determination module denotes that the target container has been supplied to a consumer;
a rights protection module, configured to acquire source information of the target container supplied by the owner when the latest determined state determined by the state determination module does not denote that the target container has been supplied to the consumer, and transmit the source information to a product manufacturer corresponding to the target container.

As an optional implementation mode, in the second aspect of the embodiments of the present invention, the apparatus further includes:
a second determination module, configured to determine, according to the container parameters, a manufacturer account corresponding to the target container after the calculation module calculates the target guarantee deposit matched with the type data, wherein the manufacturer account is at least one of an account corresponding to the product manufacturer corresponding to the target container and an account corresponding to a distributor that conducts sales/renting activities on the target container;
a deduction module, configured to deduct the target guarantee deposit and/or a return service fee for the target container from the manufacturer account.

As an optional implementation mode, in the second aspect of the embodiments of the present invention, the apparatus further includes:
a third determination module, configured to determine, according to the type parameters, a return type that the owner returns the target container after the second detection module detects that the target container is placed at the specified recycling position, and determine, according to the return type, a guarantee deposit calculation mode matched with the return type, wherein the return type is an after-use return type or not-use return type, the after-use return type being configured to denote that the owner rents the target container in a renting manner or uses the target container by purchasing goods accommodated in the target container, and the not-use return type denoting that the owner neither rents the target container in the renting manner, nor uses the target container by purchasing the goods accommodated in the target container;
a mode for calculating the target guarantee deposit matched with the type data by the calculation module is specifically to:
   calculating, according to the guarantee deposit calculation mode matched with the return type, the target guarantee deposit matched with the type data.

A third aspect of the embodiments of the present invention discloses another apparatus for intelligently controlling circulation of a recyclable container. The apparatus includes:
a memory, storing executable program codes;
a processor, coupled to the memory;
the processor calls the executable program codes stored in the memory to implement the method for intelligently controlling circulation of the recyclable container, which is disclosed by the first aspect of the embodiments of the present invention.

A fourth aspect of the embodiments of the present invention discloses a computer storable medium. The computer storable medium stores computer instructions; and the computer instructions are configured to, when called, implement the method for intelligently controlling circulation of the recyclable container, which is disclosed by the first aspect of the embodiments of the present invention.

Compared with the prior art, the embodiments of the present invention has the following beneficial effects.

In the embodiments of the present invention, whether the container return verification request is received is detected, the container return verification request being triggered when the owner needs to return the recyclable target container, and the container return verification request including the container parameters used for identifying the type data of the target container; when the container return verification request is received, the type data identified according to the container parameters is verified; when the verification succeeds, whether the target container is placed at the specified recycling position is detected; and when the detection result is yes, the target guarantee deposit matched with the type data is calculated, and the target guarantee deposit is granted to the owner. Therefore, implementation of the present invention can provide an intelligent recycling method for the recyclable container, which is favorable for strengthening the awareness of returning the recyclable container, and then can reduce the pollution, caused by the fact that a container is thrown away or is not recycled in time, to the environment.

### Brief Description of the Drawings

In order to explain the technical solutions of the embodiments of the present invention more clearly, the following will briefly introduce the accompanying drawings used in the description of the embodiments. Apparently, the drawings in the following description are only some embodiments of the present invention. Those of ordinary skill in the art can obtain other drawings based on these drawings without creative work.
Fig. 1 is a scene diagram of a circulation scene of a recyclable container, which is disclosed by the embodiments of the present invention;
Fig. 2 is a flow diagram of a method for intelligently controlling circulation of a recyclable container, which is disclosed by the embodiments of the present invention;
Fig. 3 is a flow diagram of another method for intelligently controlling circulation of a recyclable container, which is disclosed by the embodiments of the present invention;
Fig. 4 is a flow diagram of a yet another method for intelligently controlling circulation of a recyclable container, which is disclosed by the embodiments of the present invention;
Fig. 5 is a flow diagram of returning a guarantee deposit, which is disclosed by the embodiments of the present invention;
Fig. 6 is a schematic structural diagram of an apparatus for intelligently controlling circulation of a recyclable container, which is disclosed by the embodiments of the present invention;
Fig. 7 is a schematic structural diagram of another apparatus for intelligently controlling circulation of a recyclable container, which is disclosed by the embodiments of the present invention; and
Fig. 8 is a schematic structural diagram of a yet another apparatus for intelligently controlling circulation of a recyclable container, which is disclosed by the embodiments of the present invention.

### Detailed Description of the Illustrated Embodiments

In order to make those skilled in the art better understand the solutions of the present invention, the technical solutions in the embodiments of the present invention will be described clearly and completely below in combination with the drawings in the embodiments of the present invention. Obviously, the embodiments described herein are only part of the embodiments of the present invention, not all the embodiments. Based on the embodiments in the present invention, all other embodiments obtained by those of ordinary skill in the art without doing creative work shall fall within the protection scope of the present invention.

The terms "first", "second", etc. in the specification and claims of the present invention and the above drawings are used to distinguish different objects, and are not intended to describe a specific sequence. In addition, the terms "include", "has" and any of their variations mean covering a non-exclusive inclusion. For example, processes, methods, apparatuses, products or terminals which include a series of steps or units are not limited to the listed steps or units, but selectively further include steps or units which are not listed, or selectively further include other steps or units which are inherent to these processes, methods, products or terminals.

The "embodiment" mentioned herein means that specific features, structures or characteristics described in combination with the embodiments may be included in at least one embodiment of the present invention. This phrase appearing at each position in the description does not refer to the same embodiment, and is not an independent or candidate embodiment mutually exclusive with other embodiments. Those skilled in the art can explicitly and implicitly understand that the embodiments described herein may be combined with other embodiments.

The present invention discloses a method and apparatus for intelligently controlling circulation of a recyclable container, and provides an intelligent recycling method for a recyclable container, which is favorable for strengthening the awareness of returning the recyclable container to reduce the pollution, caused by the fact that a container is thrown away or is not recycled in time, to the environment. Detailed descriptions are carried out below respectively.

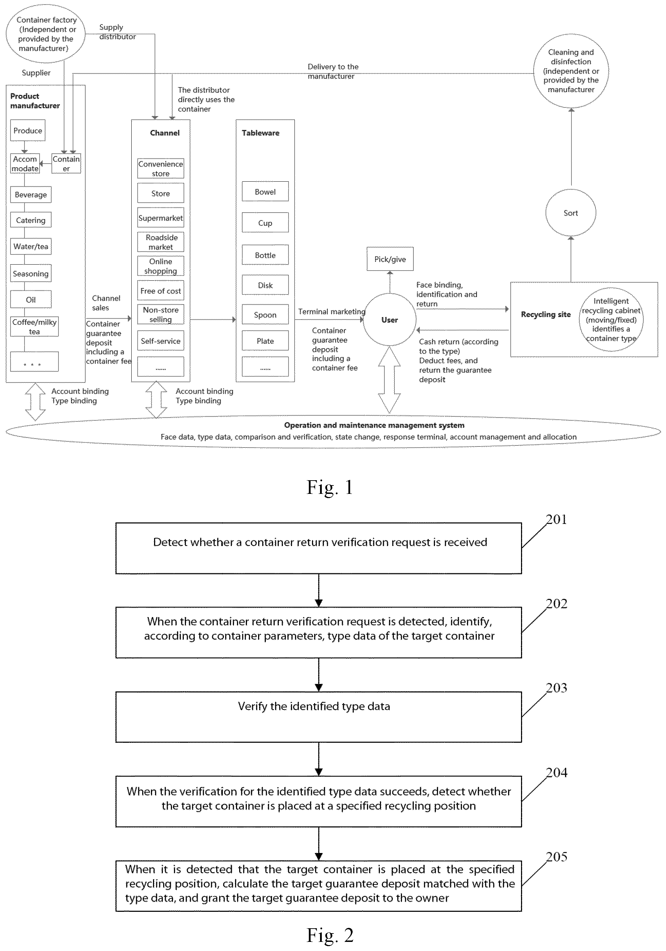

In order to better understand the method and apparatus for intelligently controlling circulation of the recyclable container, which are disclosed by the present invention, a circulation scene of the recyclable container is first described. Specifically, the circulation scene of the recyclable container can be as shown in Fig. 1. Fig. 1 is a scene diagram of a circulation scene of a recyclable container, which is disclosed by the embodiments of the present invention. The scene shown in Fig. 1 mainly involves a container manufacturer, a product manufacturer, a user, a recycling site, a cleaning disinfection site, and an operation and maintenance management system (also referred to as an operation management system), and can further involve a distributor, specifically:
The container manufacturer, the product manufacturer, the distributor and the user can all open an account that corresponds to a unique identifier in the operation and maintenance management system. That is, the operation and maintenance management system allocates corresponding accounts to the container manufacturer, the product manufacturer, the distributor and the user and manages the corresponding accounts; or, the container manufacturer, the product manufacturer, the distributor and the user can also bind a third-party account or a bank account that corresponds to the respective unique identifier in the operation and maintenance management system.

The container manufacturer is used for producing recyclable containers. Specifically, the container manufacturer can produce customized containers for different product manufacturers or different distributors according to their demands. For example, the container manufacturer customizes recyclable containers with specific type parameters (such as shapes, sizes, materials, volumes and unique identifiers of containers) for different product manufacturers, or customizes recyclable containers having specific LOGOs or specific appearances for different product manufacturers, and the container manufacturer can be an independent manufacturer, or a manufacturer equipped for specific product manufacturers or distributors. Alternatively, the recyclable containers produced by the container manufacturer may be marked with identifiers used for indicating that the containers are "recyclable", and may be further marked with a detailed flow for recycling.

The product manufacturer may directly purchase the recyclable containers from the container manufacturer, or may purchase the recyclable containers through the operation and maintenance management system. In addition, after the product manufacturer purchases the recyclable containers, the operation and maintenance management system needs to bind the unique identifier of the product manufacturer with the type parameters of the recyclable containers purchased by the product manufacturer, and the recyclable containers ordered by the product manufacturer may be directly rented to the distributor and/or the user, or after filled with goods, the recyclable containers may be supplied to the distributor or sold to the user. Further, when the product manufacturer rents out a recyclable container, an object (such as the distributor or the user) renting the recyclable container needs to pay a certain fee to the product manufacturer, and this fee may include a container guarantee deposit for the recyclable container, and may further include a container fee (i.e., a use charge for the container) for the recyclable container. When the product manufacturer sells goods contained via the recyclable container, an object (such as the distributor or the user) purchasing the goods contained via the recyclable container needs to pay a certain fee to the product manufacturer, and this fee may include a container guarantee deposit for the recyclable container and a sell amount of the goods contained via the recyclable container, and may further include a container fee (i.e., a container use charge) for the recyclable container.

The distributor may also directly purchase the recyclable containers from the container manufacturer, or may purchase the recyclable containers through the operation and maintenance management system. In addition, after the distributor purchases the recyclable containers, the operation and maintenance management system needs to bind the unique identifier of the distributor with the type parameters of the recyclable containers purchased by the distributor. The distributor purchases the recyclable containers, and rents them to the user or fills the recyclable containers with goods and sells them to the user. Or, the distributor may also directly or, by means of the operation and maintenance management system, order the goods accommodated in the recyclable containers from the product manufacturer, and after the distributor orders the goods accommodated in the recyclable containers from the product manufacturer, the operation and maintenance management system needs to bind the unique identifier of the distributor with the type parameters of the recyclable containers used for accommodating the goods ordered by the distributor, and may further bind the unique identifier with the unique identifier of the product manufacturer that supplies the goods accommodated in the recyclable containers.

The distributor purchases the recyclable containers and directly, or by means of a self-service terminal, rents them to the user or fills the recyclable containers with goods and sells them to the user. When a recyclable container is directly rent to the user, the user needs to pay a certain fee to the distributor, and this fee includes a container guarantee deposit for the recyclable container, and may further include a container fee (i.e., a container use charge) for the recyclable container. When a recyclable container is filled with goods and sold to the user, the user needs to pay a certain fee to the distributor, and this fee may include a container guarantee deposit for the recyclable container and a sell amount of the goods contained via the recyclable container, and may further include a container fee (i.e., a container use charge) for the recyclable container.

When the user needs to return the recyclable container, the user can directly place the recyclable container at a preset recycling site, such as a movably/fixedly disposed recycling cabinet/intelligent recycling cabinet, or may return the recycling container by means of door-to-door recycling by recycling personnel. When return succeeds, the recycling site or the operation and maintenance management system can directly grant the guarantee deposit to the account corresponding to the user. The recyclable container needing to be returned by the user may be a recyclable container rent by the user, or may be a recyclable container obtained by the user by purchasing the goods accommodated in the recyclable container, or may also be a picked recyclable container, or may be also be a recyclable container given by others.

When the user returns the recyclable container at the recycling site, the recycling site or the operation and maintenance management system needs to perform face binding for the user if the user does not conduct the face binding; and the recycling site or the operation and maintenance management system needs to compare and verify the recyclable container returned by the user if the user has conducted the face binding, and allows the user to return the recyclable container when comparison and verification succeed, and calculates, according to the type of the recyclable container returned by the user, a guarantee deposit needing to be granted to the user. If the recyclable container returned by the user is the recyclable container that is rent by the user or other users or is obtained by purchasing the goods accommodated in the recyclable container, the recycling site or the operation and maintenance management system needs to deduct the container use charge of the recyclable container from the fee, paid by the user, of the recyclable container that is directly rent or is obtained by purchasing the goods accommodated in the recyclable container. Further, if the recyclable container returned by the user is a recyclable container that is rent by other users or is obtained by purchasing the goods accommodated in the recyclable container, the recycling site or the operation and maintenance management system does not need to return the guarantee deposit to other users.

The recycling site may directly transport the recycled recyclable containers to the cleaning disinfection site, and the cleaning disinfection site performs sorting and cleaning disinfection operations on all the received recyclable containers. After the sorting and cleaning disinfection operations are finished, the recyclable containers may be transported to corresponding objects, such as the product manufacturer or the distributor. Or, the recycling site may sort the recycled recyclable containers, and then transport them to the cleaning disinfection site, and the cleaning disinfection site performs the cleaning disinfection operation on all the received recyclable containers. After the cleaning disinfection operation is finished, the recyclable containers may be transported to corresponding objects, such as the product manufacturer or the distributor.

Further, the operation and maintenance management system also needs to updates the states of the recyclable containers in real time according to a circulation process of the recyclable containers, and can further form, according to state changes of the recyclable containers, tracing information of the recyclable containers for checking by at least one object in the user, the container manufacturer, the distributor and the product manufacturer.

It should be noted that the above product manufacturer may be a production and processing manufacturer that produces beverages, coffee, milky tea, catering-related food, water/tea, seasoners and all types of other goods which can be accommodated by using the recyclable containers. The above distributor may be any one of a convenience store, a supermarket, a roadside market, an outlet, a self-service terminal, a store, an outlet store and the like. In addition, the recyclable containers may include all types of containers capable of accommodating goods, including, but not limited to, at least one of recyclable bowls, recyclable glasses, recyclable plates, recyclable bottles, recyclable disks, recyclable spoons, and recyclable lunch boxes.

The circulation scene of the recyclable containers is described above. The method and apparatus for intelligently controlling circulation of a recyclable container is described below in detail.

### Embodiment I

Referring to Fig. 2, Fig. 2 is a flow diagram of a method for intelligently controlling circulation of a recyclable container, which is disclosed by the embodiments of the present invention. The method for intelligently controlling circulation of the recyclable container, which is described in Fig. 2 can be applied to an operation and maintenance management system, and can also be applied to an intelligent recycling terminal (such as a fixedly/movably arranged intelligent recycling cabinet), and the embodiments of the present invention do not limit it. As shown in Fig. 2, the method for intelligently controlling circulation of the recyclable container may include the following steps that:
201, whether a container return verification request is received is detected; when a detection result of the step 201 is yes, execution of the step 202 is triggered; and when the detection result of the step 201 is no, the step 201 is continued to be executed.

In the embodiments of the present invention, the container return verification request is triggered when any owner needs to return any target container, and the target container is a recyclable container. The container return verification request includes container parameters used for identifying type data of the target container. Optionally, the container parameters may include, but not limited to, at least one of the shape of the target container, the weight of the target container, the size of the target container, the volume of the target container, the material of the target container, the brand logo (a product manufacturer identifier) of the target container, the unique identifier (such as a string of character identifiers or a QR code, a VR code and other code figures) of the target container, the type integrity of the target container, and embedded data of the target container. The embodiments of the present invention do not limit it. The embedded data of the target container is specifically data that is stored or written into a built-in embedded chip of the recyclable container. Optionally, the embedded data may include factory parameter information of the target container, such as at least one of the factory shape of the target container, the factory weight of the target container, the factory size of the target container, the factory volume of the target container, the factory material of the target container, the brand logo (a product manufacturer identifier) of the target container, the unique identifier (such as a string of character identifiers or a QR code, a VR code and other code figures) of the target container, and the factory type integrity of the target container. The embedded data may also be used for verifying the accuracy of other identified type parameters. Further optionally, the unique identifier of the target container may carry at least one of container manufacturer information (such as the identifier and the address of the container manufacturer) of the target container, production information (such as a production cycle, a production start date, and a production completion date) of the target container, batch information to which the target container belongs, and product manufacturer information corresponding to the target container.

In the embodiments of the present invention, the target container needing to be returned by the owner may be a target container directly rent by the owner, or may be a target container obtained by purchasing goods accommodated in the target container by the owner, or may be a directly picked target container, or may also be a target container given by others. The embodiments of the present invention do not limit it.

It should be noted that when all execution main bodies for all the steps in the embodiments of the present invention are operation and maintenance management systems (also referred to as "operation management system"), the container return verification request may be triggered by the owner through a user terminal of the owner, or may be triggered by the owner through the intelligent recycling terminal. The embodiments of the present invention do not limit it. If the container return verification request is triggered by the owner through the intelligent recycling terminal, the container return verification request may specifically be triggered by the owner who stands in front of a human body induction apparatus of the intelligent recycling terminal, or may be triggered by pressing a recycling key on the intelligent recycling terminal, or may be triggered by touching a recycling icon on a display screen of the intelligent recycling terminal, or may be triggered by inputting a speech with a key word such as "return" or "recycle". The embodiments of the present invention do not limit it. Further, the container return verification request being triggered by the owner who stands in front of the human body induction apparatus of the intelligent recycling terminal may specifically be that the container return verification request is triggered by the owner who stands at a specific position in front of the human body induction apparatus of the intelligent recycling terminal, or stands in front of the human body induction apparatus of the intelligent recycling terminal and poses correspondingly, or stands in front of the human body induction apparatus of the intelligent recycling terminal and makes a corresponding gesture and/or an emotion to trigger. The embodiments of the present invention do not limit it.

202, when the container return verification request is detected, type data of the target container is identified according to the container parameters.

In the embodiments of the present invention, optionally, the type data may be a brand type corresponding to the target container, or the type data may directly be the container parameters. The embodiments of the present invention do not limit it.

203, the identified type data is verified; when the verification succeeds, the execution of the step 204 is triggered; and when the verification fails, this flow is ended.

In the embodiments of the present invention, the step that the identified type data is verified may include that:
whether certain data matched with the identified type data is present in a pre-stored type database is verified; and when it is verified that the certain data is present, it is determined that the verification succeeds. Whether certain data matched with the identified type data is present in the pre-stored type database is verified to determine whether the target container is a target container, used for accommodating goods, of a product manufacturer that has been registered on the operation and maintenance management system or a target container, used for accommodating goods, of a distributer that has been registered on the operation and maintenance management system, so that the recycling accuracy for the target container can be guaranteed.

It should be noted that when the verification for the identified type data fails, the method may also include:
whether the target container is placed at a specified recycling position is detected; when it is detected that the target container is placed at the specified recycling position, a target guarantee deposit matched with the target container is calculated, and the target guarantee deposit is granted to the owner. At this time, the step that the target guarantee deposit matched with the target container is calculated may specifically be that the target guarantee deposit matched with the target container is calculated according to at least one of the material of the target container, the weight of the target container, the integrity of the target container, the size of the target container, the shape of the target container, the volume of the target container and the brand identifier of the target container, and the target guarantee deposit granted to the owner is deducted from an account corresponding to the operation and maintenance management system. In this way, prize recycling can also be realized for unbundling types of target containers, thereby strengthening the recycling awareness and recycling enthusiasm of people of returning recyclable containers made of recyclable resources in time, and further reducing the problem of environmental pollution caused by the fact that containers are thrown away or are not recycled in time.

204, when the verification for the identified type data succeeds, whether the target container is placed at the specified recycling position is detected; when a detection result of the step 204 is yes, execution of the step 205 is triggered; and when the detection result of the step 204 is no, this flow can be directly ended.

In the embodiments of the present invention, the specified recycling position may be any one position in a plurality of preset manual recycling sites, a plurality of preset automatic recycling sites (such as moving/fixed recycling cabinets/intelligent recycling cabinets), and a preset cleaning disinfection site. The embodiments of the present invention do not limit it. In addition, detection of whether the target container is placed at the specified recycling position may be detection performed according to a message fed back by a person in charge of the recycling site, or may be detection performed according to an induction result of a corresponding sensor, such as a weight collected by a weight sensor, and an induction result of an infrared sensor.

205, when it is detected that the target container is placed at the specified recycling position, the target guarantee deposit matched with the type data is calculated, and a target guarantee deposit is granted to the owner.

In the embodiments of the present invention, specifically, the target guarantee deposit matched with the type data may specifically be a target guarantee deposit matched with the product manufacturer and/or the distributor corresponding to a target type, or may specifically be a target guarantee deposit matched with the product manufacturer and/or the distributor corresponding to a target type and matched with specific type parameters of the target container. The embodiments of the present invention do not limit it. For the same manufacturer and/or distributor, target guarantee deposits corresponding to target containers with different volumes/sizes/materials/weights/type integrities are different.

In the embodiments of the present invention, the step that the target guarantee deposit is granted to the owner may include that:
the target guarantee deposit is granted to a bank account specified by the owner and signed with the operation and maintenance management system, a third-party account specified by the owner and signed with the operation and maintenance management system, or an account of the owner, which is opened in the operation and maintenance management system.

In the embodiments of the present invention, when an execution main body for the step 201 to the step 205 is the intelligent recycling terminal, the step that the target guarantee deposit is granted to the owner may also include that:

the intelligent recycling terminal determines a guarantee deposit granting mode selected by the owner, and grants the target guarantee deposit to the owner through the guarantee deposit granting mode selected by the owner. The guarantee deposit granting mode includes a cash mode or a noncash mode.

Further, when the guarantee deposit granting mode selected by the owner is the cash mode, the method may further include that:
whether the amount of all pre-stored cash is greater than or equal to the calculated target guarantee deposit is determined; when a determination result is yes, cash equal to the target guarantee deposit is output for the owner to take away;
when the determination result is no, prompt information indicating that the cash is not enough to grant the target guarantee deposit is output, and all noncash modes are output for the owner to select, and the target guarantee deposit is granted to the owner according to one of the noncash modes selected by the owner. The noncash mode is a mode for granting the target guarantee deposit to the bank account specified by the owner and signed with the operation and maintenance management system, a mode for granting the target guarantee deposit to the third-party account specified by the owner and signed with the operation and maintenance management system, or a mode for granting the target guarantee deposit to the account opened by the owner in the operation and maintenance management system, and the like. The embodiments of the present invention do not limit it.

It can be seen that the method for intelligently controlling the circulation of the recyclable container, which is described in Fig. 2, can provide an intelligent recycling method for the recyclable container, which is favorable for strengthening the awareness of returning the recyclable container to reduce the pollution, caused by the fact that a container is thrown away or is not recycled in time, to the environment.

### Embodiment II

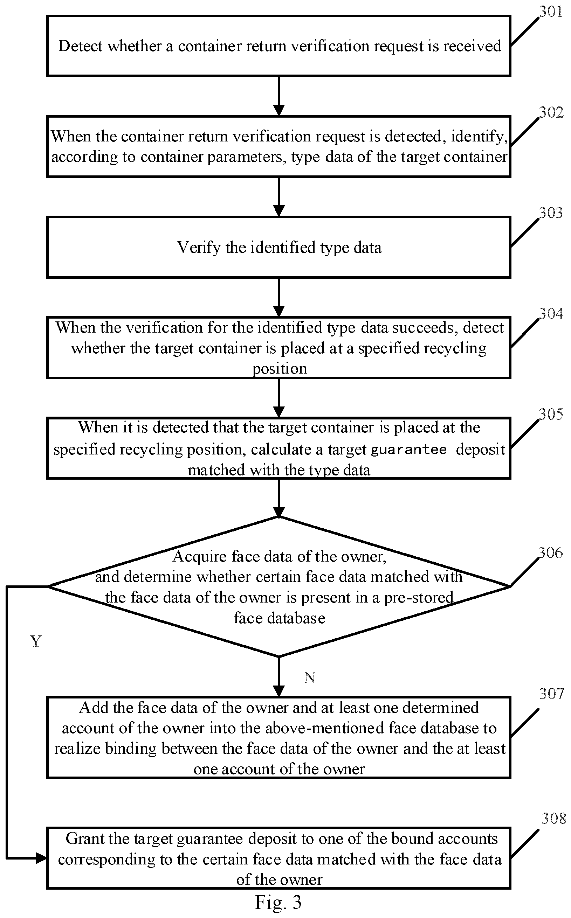

Referring to Fig. 3, Fig. 3 is a flow diagram of another method for intelligently controlling circulation of a recyclable container, which is disclosed by the embodiments of the present invention. The method for intelligently controlling the circulation of the recyclable container, which is described in Fig. 3 can be applied to an operation and maintenance management system (also referred to as "operation management system"), and can also be applied to an intelligent recycling terminal (such as a fixedly/movably arranged intelligent recycling cabinet), and the embodiments of the present invention do not limit it. As shown in Fig. 3, the method for intelligently controlling circulation of the recyclable container may include the following steps that:
301, whether a container return verification request is received is detected; when a detection result of the step 301 is yes, execution of the step 302 is triggered; and when the detection result of the step 301 is no, the step 301 may be continued to be executed, or this flow may be ended.

302, when the container return verification request is detected, type data of the target container is identified according to the container parameters.

303, the identified type data is verified; when the verification succeeds, the execution of the step 304 is triggered; and when the verification fails, this flow is ended.

304, when the verification for the identified type data succeeds, whether the target container is placed at the specified recycling position is detected; when a detection result of the step 304 is yes, execution of the step 305 is triggered; and when the detection result of the step 304 is no, this flow can be directly ended.

305, when it is detected that the target container is placed at the specified recycling position, a target guarantee deposit matched with the type data is calculated.

306, face data of the owner is acquired, and whether certain face data matched with the face data of the owner is present in a pre-stored face database is determined; when a determination result of the step 306 is yes, execution of the step 308 is triggered; and when the determination result of the step 306 is no, execution of the step 307 is triggered.

In the embodiments of the present invention, when the determination result of the step 306 is yes, it is determined that the owner has conducted face binding and a corresponding bound account is present; when the determination result is no, it is determined that the owner has not conducted the face binding, that is, no corresponding binding account is present, and the execution of the step 307 is triggered, or cash is directly granted to the owner. For example, the intelligent recycling terminal directly outputs, through a cash output port, cash equal to the target guarantee deposit. The acquired face data of the owner may be collected by a user terminal of the owner, or may be collected by a face scanning apparatus (such as a camera) of the intelligent recycling terminal. The embodiments of the present invention do not limit it.

In the embodiments of the present invention, the face database is used for storing all face data of bound accounts, and each piece of face data corresponds to at least one bound account. The bound account corresponding to the face data may include, but not limited to, at least one of a signed bank account, a signed third-party account and an account directly opened by the owner, and at least one bound account corresponding to each piece of face data may be self-registered and bound by a corresponding object, or may be bound by a corresponding object in an authorization manner. The embodiments of the present invention do not limit it.

307, the face data of the owner and at least one determined account of the owner are added into the above-mentioned face database to realize binding between the face data of the owner and the at least one account of the owner.

In the embodiments of the present invention, the at least one determined account of the owner is self-registered by the owner, or may be directly authorized by the owner. The embodiments of the present invention do not limit it.

308, the target guarantee deposit is granted to one of the bound accounts corresponding to the certain face data matched with the face data of the owner.

In the embodiments of the present invention, other detailed descriptions for the step 301 to the step 305 refer to the detailed descriptions for the step 201 to the step 205 in Embodiment I. Repeated descriptions are omitted in the embodiments of the present invention. It should be noted that the step 306 is carried out if the detection result of the step 301 is yes. The step 306 and any step in the step 302 to the step 305 have no precedence relationship. That is, the step 306 may be carried out prior to or after any step in the step 302 to the step 305, or is carried out synchronously with any step in the step 302 to the step 305. The embodiments of the present invention do not limit it.

In the embodiments of the present invention, before the target guarantee deposit is granted, whether the owner has conducted face binding in the operation and maintenance management platform is determined; if the owner has conducted the face binding, the target guarantee deposit is granted; and if the owner has not conducted the face binding, the face data of the owner is bound. In this way, the recycling traceability of the recyclable container and the traceability of the granted guarantee deposit can be realized.

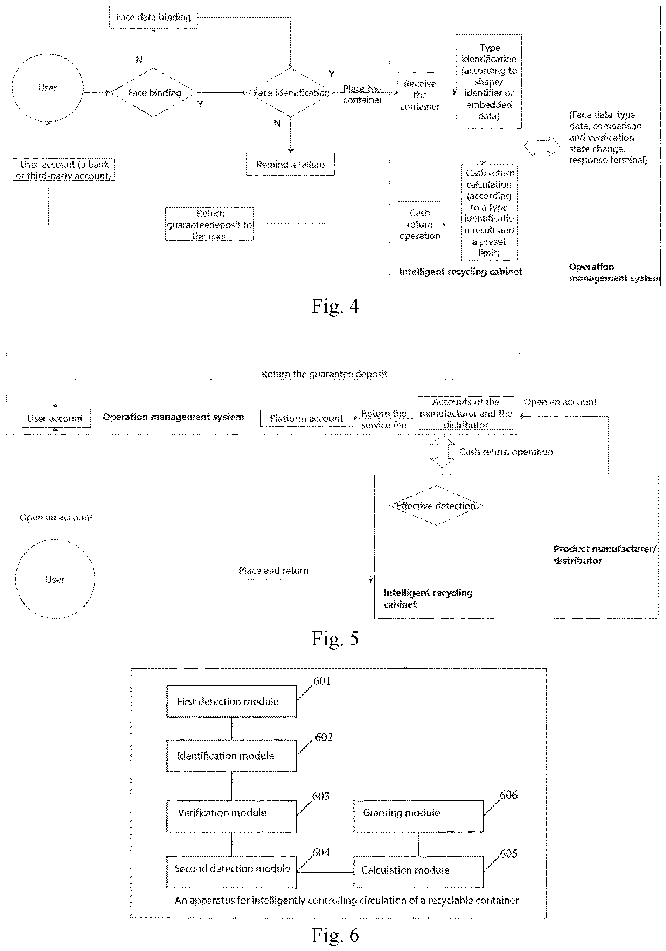

In the embodiments of the present invention, the method for intelligently controlling the circulation of the recyclable container is illustrated by taking "the owner (also referred to as "user") returns a recyclable container through an intelligent recycling cabinet and the operation management system (also referred to as "operation and maintenance management system") performs comparison and verification" for example, specifically as shown in Fig. 4. Fig. 4 is a flow diagram of a yet another method for intelligently controlling circulation of a recyclable container, which is disclosed by the embodiments of the present invention. As shown in Fig. 4:
A user initiates, by identifying a unique identifier of the intelligent recycling cabinet (such as scanning a QR code on the intelligent recycling cabinet and the like), to the intelligent recycling cabinet a return request used for asking for returning the recyclable container held by the user. The intelligent recycling cabinet collects face data of the user, and transmits the collected face data to the operation management system, and the operation management system determines whether the user conducts face binding, and further identifies or collects the face data of the user if the user does not conduct the face binding, so as to realize the face binding of the user. After the face binding of the user succeeds or the face identification of the user succeeds, the intelligent recycling cabinet controls a cabinet door of the intelligent recycling cabinet to be opened to cause the user to return the recyclable container. After receiving the recyclable container, the intelligent recycling cabinet collects type parameters (such as the shape and embedded data) of the type data of the recyclable container, and transmits a container return verification request that includes the identified type parameters to the operation management system. In response to the container return verification request transmitted by the intelligent recycling cabinet, the operation management system identifies, according to the type parameters, the type data and compares and verifies the type data. When the comparison and verification succeed, a verification succeed prompt that includes the type data is transmitted to the intelligent recycling cabinet, and the current return state of the recyclable container is updated to a recycled to-be-cleaned state (or a returned to-be-cleaned state). After receiving the verification succeed prompt, the intelligent recycling cabinet calculates return money according to the type data included in the verification succeed prompt, so as to calculate the guarantee deposit needing to be returned to the user, and executes a money return operation for the user, so as to return the calculated guarantee deposit to an account opened by the user in the operation management system, or a bank account or a third-party account that is specified by the user and has been signed with the operation management system; or,
the user initiates, by identifying a unique identifier of the intelligent recycling cabinet (such as scanning a QR code on the intelligent recycling cabinet and the like), to the operation management system a return request used for asking for returning the recyclable container held by the user. The return request includes a face binding identifier and the unique identifier of the intelligent recycling cabinet. When the face binding identifier is yes, the operation management system transmits a recycling instruction and a face identification instruction to the intelligent recycling cabinet; and the intelligent recycling cabinet identifies, according to the face identification instruction, face data of the user, and opens, according to the recycling instruction, a cabinet door to recycle the recyclable container and collect type parameters used for identifying type data, and transmits to the operation management system the container return verification request that includes the face data and the type parameters. The operation management system compares the face data, and verifies the type data identified according to the type parameters. When the face data comparison succeeds, and the type data is verified to be accurate, a verification succeed prompt that includes the type data is transmitted to the intelligent recycling cabinet, and the current return state of the recyclable container is updated to a recycled to-be-cleaned state (or a returned to-be-cleaned state). After receiving the verification succeed prompt, the intelligent recycling cabinet calculates return money according to the type data included in the verification succeed prompt, so as to calculate the guarantee deposit needing to be returned to the user, and executes a money return operation for the user, so as to return the calculated guarantee deposit to an account opened by the user in the operation management system, or a bank account or a third-party account that is specified by the user and has been signed with the operation management system. When the face binding identifier is no, the operation management system instructs the user to conduct the face data binding and repeatedly perform the operation that the above operation management system transmits the recycling instruction and the face identification instruction to the intelligent recycling cabinet.

In one optional embodiment, the method for intelligently controlling the circulation of the recyclable container may further include that:
when it is detected that the target container is placed at the specified recycling position, the current return state of the target container is updated to a recycled to-be-cleaned state. In this way, the mode for updating the current return state of the target container in time is favorable for ensuring the target container to be in a latest circulation state, and then is favorable for improving the traceability reliability for the recyclable container, and can further reduce a situation of blocked circulation of the recyclable container caused by the fact that the state is not updated in time and reduce a situation of repeated recycling of the recyclable container.

In the present optional embodiment, further optionally, after the container return verification request is detected, and before the type data of the target container is identified according to the container parameters, the method for intelligently controlling the circulation of the recyclable container may further include that:
the current return state of the target container is determined according to the container parameters, and whether the current return state of the target container is a to-be-recycled state is determined; and when the current return state of the target container is the to-be-recycled state, the operation of identifying, according to the container parameters, the type data is triggered. It can be seen that in this way, the mode for performing subsequent operations after it is determined that the current return state of the target container is the to-be-recycled state can not only ensure the recycling reliability for the recyclable container, but also reduce unnecessary operations.

In the present optional embodiment, after it is detected that the current return state of the target container is the to-be-recycled state, and before the type data is identified according to the container parameters, the method for intelligently controlling the circulation of the recyclable container may further include that:
early-stage states, arranged according to a chronological order, of the target container before the to-be-recycled state are determined;
whether the early-stage states sequentially include a cleaned-disinfected state, a warehoused state and a delivered state is determined, and when it is determined that the early-stage states sequentially include the cleaned-disinfected state, the warehoused state and the delivered state, the operation of identifying, according to the container parameters, the type data is triggered to be executed. In this way, the recycling accuracy and the reliability of the recyclable container are further guaranteed; it is ensured that an intact circulation process must include cleaning disinfection, warehousing and delivery-goods-from-warehouse flows; the dietary safety of the user when using the recyclable container is improved; and it is favorable for increasing the accepting degree of the recyclable container.

In another optional embodiment, after the container return verification request is detected, and before the type data of the target container is identified according to the container parameters, the method for intelligently controlling the circulation of the recyclable container may further include that:
a latest determined state of the target container is determined according to the container parameters; whether the latest determined state denotes that the target container has been supplied to a consumer is determined; and when it is determined that the latest determined state denotes that the target container has been supplied to the consumer, the operation of identifying, according to the container parameters, the type data is triggered. Specifically, the latest determined state of the target container can be determined in accordance with the circulation tracing information of the target container.

It should be noted that the above operation of determining, according to the above container parameters, the latest determined state of the target container may also specifically occur after it is determined that the current return state of the target container is the to-be-recycled state. At this time, the latest determined state may specifically be a determined state that is before the to-be-recycled state and is closest in time to the to-be-recycled state; or, after it is determined that the latest determined state denotes that the target container has been supplied to the consumer, the above operation of determining, according to the container parameters, the current return state of the target container may also be triggered. The embodiments of the present invention do not limit it.

In the present optional embodiment, further optionally, the method for intelligently controlling the circulation of the recyclable container may further include that:
when it is determined that the latest determined state does not denote that the target container has been supplied to the consumer, source information of the target container supplied by the owner is acquired, and the source information is transmitted to a product manufacturer corresponding to the target container and/or a container manufacturer corresponding to the target container. The source information of the target container may include a source type, such as a purchase/rent type or non-purchase/rent type (such as a pick type or an award type). In addition, when the source type is the purchase/rent type, the source information of the target container may further include a detailed address for purchasing/renting and/or detailed time for purchasing/renting. When the source type is the non-purchase/rent type, the source information of the target container may further include source object information (such as a name, an address and a contact) and/or source time.

In the present optional embodiment, the mode for identifying, according to the container parameters, the type data of the target container only after it is determined that the target container has been supplied to the consumer can reduce unnecessary identification operations and improve the recycling reliability. Furthermore, when it is determined that the target container has not been supplied to the consumer if the owner returns the target container, it is preliminarily considered that there is a fake and shoddy situation, and then the source information of the target container is collected and transmitted to the product manufacturer corresponding to the target container and/or the container manufacturer corresponding to the target container, so as to crack down on fake and shoddy behaviors; and ways to protect the rights are added, which are favorable for protecting the legitimate rights and interests of the product manufacturer corresponding to the target container and/or the container manufacturer corresponding to the target container.

In another optional embodiment, after the execution of the above calculation of the target guarantee deposit matched with the type data, the method for intelligently controlling the circulation of the recyclable container may include the following operations that:
a manufacturer account corresponding to the target container is determined according to the container parameters, wherein the manufacturer account is at least one of an account corresponding to the product manufacturer corresponding to the target container and an account corresponding to a distributor that conducts sales/renting activities on the target container;
the target guarantee deposit and/or a return service fee for the target container is deducted from the manufacturer account, wherein the return service fee for the target container, which is deducted from the manufacturer account, is returned to a platform account corresponding to the operation and maintenance management system.

Optionally, when the manufacturer account is an account corresponding to the product manufacturer corresponding to the target container and an account corresponding to the distributor that sells the target container, the operation that the target guarantee deposit and/or the return service fee for the target container is deducted from the manufacturer account may include that:
certain amounts of the guarantee deposit are deducted, according to pre-determined deduction proportions, from the account corresponding to the product manufacturer corresponding to the target container and an account corresponding to the distributor that sells the target container, wherein a sum of the deducted guarantee deposits is equal to the target guarantee deposit; and/or,
certain amounts of the return service fee are deducted, according to pre-determined deduction proportions, from the account corresponding to the product manufacturer corresponding to the target container and an account corresponding to the distributor that sells the target container, wherein a sum of the deducted return service fees is the final return service fee.

Specifically, the operation that the user returns the recyclable container through the intelligent recycling cabinet is taken for example for illustration. A specific flow for granting the guarantee deposit corresponding to the present optional embodiment may be as shown in Fig. 5. Fig. 5 is a flow diagram of granting a guarantee deposit, which is disclosed by the embodiments of the present invention. As shown in Fig. 5, the user returns the recyclable container needing to be returned to the intelligent recycling cabinet. After the intelligent recycling cabinet directly, or through the operation management system, effectively detects the recyclable container placed by the user (such as face data comparison and type data verification), the intelligent recycling cabinet performs a cash return operation, i.e., the intelligent recycling cabinet deducts a part of fee as the return guarantee deposit granted to the user account and a part of fee as the return service fee added to the platform account of the operation management system from the opened manufacturer account (the account corresponding to the product manufacturer and/or the account corresponding to the distributor).

It can be seen that the present optional embodiment can directly deduct the target guarantee deposit and/or the return service fee for the target container from the manufacturer account. A guarantee deposit return mode for the recycling of the recyclable container is provided, which is not only favorable for strengthening the return enthusiasm and the return awareness of the user, but also can bring certain incomes to the operation management system.

In another optional embodiment, after it is detected that the target container is placed at the specified recycling position, the method for intelligently controlling the circulation of the recyclable container may include the following operations that:
a return type that the owner returns the target container is determined according to the type parameters, wherein the return type is an after-use return type or not-use return type, the after-use return type is configured to denote that the owner rents the target container in a renting manner or uses the target container by purchasing goods accommodated in the target container, and the not-use return type denotes that the owner neither rents the target container in the renting manner, nor uses the target container by purchasing the goods accommodated in the target container;
a guarantee deposit calculation mode matched with the return type is determined according to the return type.

The step that the target guarantee deposit matched with the type data is calculated includes that:
the target guarantee deposit matched with the type data is calculated according to the guarantee deposit calculation mode matched with the return type.

It can be seen that the present optional embodiment can provide diversified guarantee deposit calculation modes. Different guarantee deposit calculation modes are set for users of different return types, so that it is favorable for further strengthening the return enthusiasm and the return awareness of the user, and the circulation of the recyclable container is guaranteed; and the use ratio of the recyclable container is then increased.

In yet another optional embodiment, the method may further include the following operations:
after the type data of any one or any type of the recyclable containers is bound with the operation and maintenance management system, the operation and maintenance management system can generate the tracing information of the recyclable container. The tracing information may include fixed tracing information and/or variable tracing information determined according to a real-time circulation situation of the recyclable container. The fixed tracing information may specifically be at least one of an identifier of the container manufacturer that produces the recyclable container, a production date of the recyclable container, a factory date of the recyclable container, a raw material source of the recyclable container, related parameters (such as a processing technology) of the recyclable container in a production process, a cleaning disinfection identifier of the recyclable container before delivery, check data of the recyclable container after the production, and the container parameters of the recyclable container. The variable tracing information may specifically include at least one of all states of the recyclable container in the circulation process, identifiers of nodes traversed by the recyclable container in the circulation process, a date of flowing from a certain node, a date of flowing to a next node of the certain node, a circulation mode from a certain node to a next node of the certain node, and the like. The embodiments of the present invention do not limit it.

In yet another optional embodiment, the method may further include the following operations:
a real-time balance of the opened account or the bank or third-party account signed with the operation and maintenance management system is monitored, and whether the real-time balance meets a determined return requirement is determined;
when it is determined that the real-time balance does not meet the determined return requirement, an insufficient-balance prompt is transmitted to a corresponding target object to prompt that the real-time balance in the account of the corresponding target object does not meet the determined return requirement.

Determination of whether the real-time balance meets the determined return requirement is realized according to the moment of monitoring the real-time balance, a counted number of recyclable containers which are bound with the target object (the product manufacturer) and have been returned at the current date, a counted daily number of returned recyclable containers bound with the target object, a counted number of recyclable containers which are bound with the target object and have been supplied at the current date, and a counted daily number of supplied recyclable containers bound with the target object. In this way, the target object can be automatically prompted to recharge the account in the case that it is determined that the real-time balance does not meet the return requirement.

It can be seen that the method for intelligently controlling the circulation of the recyclable container, which is described in Fig. 3, can provide an intelligent recycling method for the recyclable container, which is favorable for strengthening the awareness of returning the recyclable container to reduce the pollution, caused by the fact that a container is thrown away or is not recycled in time, to the environment.

### Embodiment III

Referring to Fig. 6, Fig. 6 is a schematic structural diagram of an apparatus for intelligently controlling circulation of a recyclable container, which is disclosed by the embodiments of the present invention. As shown in Fig. 6, the apparatus for intelligently controlling the circulation of the recyclable container can be applied to an operation and maintenance management system (also referred to as "operation management system"), and can also be applied to an intelligent recycling terminal (such as a fixedly/movably arranged intelligent recycling cabinet), and the embodiments of the present invention do not limit it. The apparatus shown in Fig. 6 is used for realizing the method described in Embodiment I. As shown in Fig. 6, the apparatus for intelligently controlling circulation of the recyclable container may include:
a first detection module 601, configured to detect whether a container return verification request is received, wherein the container return verification request is triggered when an owner needs to return a target container, the target container is a recyclable container, and the container return verification request includes container parameters used for identifying type data of the target container;
an identification module 602, configured to identify, according to the container parameters, the type data when the first detection module 601 detects that the container return verification request is received;
a verification module 603, configured to verify the type data identified by the identification module 602;
a second detection module 604, configured to detect whether the target container is placed at a specified recycling position when the verification module 603 successfully verifies the type data;
a calculation module 605, configured to calculate a target guarantee deposit matched with the type data when the target container is detected to be placed at the specified recycling position;
a granting module 606, configured to grant the target guarantee deposit to the owner.

Optionally, the container parameters include at least one of the shape of the target container, the weight of the target container, the size of the target container, the volume of the target container, the material of the target container, the brand logo of the target container, the unique identifier of the target container, the type integrity of the target container, and embedded data of the target container.

It can be seen that implementation of the apparatus for intelligently controlling the circulation of the recyclable container, which is described in Fig. 6, can provide an intelligent recycling method for a recyclable container, which is favorable for strengthening the awareness of returning the recyclable container to reduce the pollution, caused by the fact that a container is thrown away or is not recycled in time, to the environment.

In one optional embodiment, the apparatus for intelligently controlling the circulation of the recyclable container may further include:
an acquisition module 607, configured to acquire face data of the owner before the granting module 606 grants the target guarantee deposit to the owner;
a first judgment module 608, configured to determine whether certain face data matched with the face data, acquired by the acquisition module 607, of the owner is present in a pre-stored face database; and when it is determined that the certain face data is present in the face database, trigger the granting module 606 to execute the operation of granting the target guarantee deposit to the owner, wherein the face database is configured to store all pieces of face data of bound accounts, and each piece of face data corresponds to at least one bound account,
wherein a mode for granting the target guarantee deposit to the owner by the granting module 606 is specifically to:
   grant the target guarantee deposit to one of the bound accounts corresponding to the certain face data matched with the face data of the owner;
   an adding module 609, configured to add the face data of the owner and the determined at least one account of the owner into the face database to realize binding between the face data of the owner and the at least one account of the owner when the first judgment module 608 determines that the certain face data is not present in the face database, and trigger the granting module 606 to execute the operation of granting the target guarantee deposit to the owner, wherein the at least one account of the owner is a bound account corresponding to the face data of the owner.

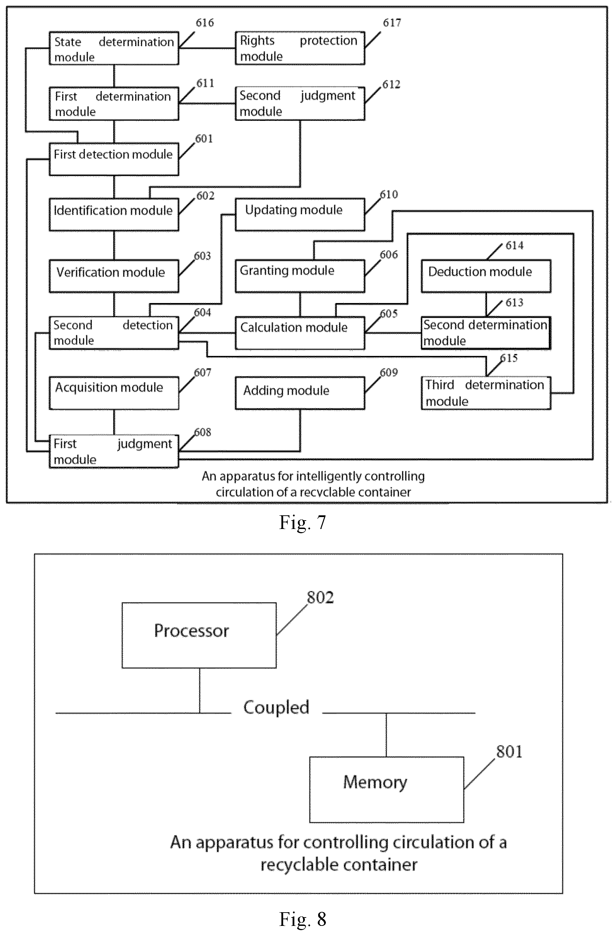

It can be seen that before the target guarantee deposit is granted, the apparatus for intelligently controlling the circulation of the recyclable container, which is described in Fig. 7, can also determine whether the owner has conducted face binding in the operation and maintenance management platform, grant the target guarantee deposit if the owner has conducted the face binding, and bind the face data of the owner if the owner has not conducted the face binding. In this way, the recycling traceability of the recyclable container and the traceability of the granted guarantee deposit can be realized.

In another optional embodiment, as shown in Fig. 7, the apparatus for intelligently controlling the circulation of the recyclable container may further include:
an updating module 610, configured to update a current return state of the target container to a recycled to-be-cleaned state after the second detection module 604 detects that the target container is placed at the specified recycling position.

Further, as shown in Fig. 7, the apparatus for intelligently controlling the circulation of the recyclable container may include:
a first determination module 611, configured to determine, according to the container parameters, a current return state of the target container after the first detection module 601 detects that the container return verification request is received;
a second judgment module 612, configured to determine whether the current return state, determined by the first determination module 611, of the target container is a to-be-recycled state.

The identification module 602 is specifically configured to identify, according to the container parameters, the type data when the first detection module 601 detects that the container return verification request is received and when the second judgment module 612 determines that the current return state of the target container is the to-be-recycled state.

It can be seen that by implementation of the apparatus for intelligently controlling circulation of the recyclable container, which is described in Fig. 7, the mode for performing subsequent operations after it is determined that the current return state of the target container is the to-be-recycled state can not only ensure the recycling reliability for the recyclable container, but also reduce unnecessary operations.

Further, the first determination module 611 is also configured to determine, after the second judgment module 612 determines that the current return state of the target container is the to-be-recycled state, early-stage states, arranged according to a chronological order, of the target container before the to-be-recycled state.

The second judgment module 612 is also configured to determine whether the early-stage states sequentially include a cleaned-disinfected state, a warehoused state and a delivered state.

The identification module 602 is specifically configured to identify, according to the container parameters, the type data when the first detection module 601 detects that the container return verification request is received, when the second judgment module 612 determines that the current return state of the target container is the to-be-recycled state and when it is determined that the early-stage states sequentially include the cleaned-disinfected state, the warehoused state and the delivered state.

It can be seen that implementation of the apparatus for intelligently controlling circulation of the recyclable container, which is described in Fig. 7, can further guarantee the recycling accuracy and the reliability of the recyclable container; it is ensured that an intact circulation process must include cleaning disinfection, warehousing and delivery-goods-from-warehouse flows; the dietary safety of the user when using the recyclable container is improved; and it is favorable for increasing the accepting degree of the recyclable container.

In yet another embodiment, as shown in Fig. 7, the apparatus further includes:
a second determination module 613, configured to determine, according to the container parameters, a manufacturer account corresponding to the target container after the calculation module 605 calculates the target guarantee deposit matched with the type data, wherein the manufacturer account is at least one of an account corresponding to the product manufacturer corresponding to the target container and an account corresponding to a distributor that conducts sales/renting activities on the target container.

In the embodiments of the present invention, after calculating the target guarantee deposit matched with the type data, the calculation module 605 can trigger the second determination module 613 to be initiated.

A deduction module 614 is configured to deduct the target guarantee deposit and/or a return service fee for the target container from the manufacturer account.

It can be seen that the apparatus described in Fig. 7 can also directly deduct the target guarantee deposit and/or the return service fee for the target container from the manufacturer account. A guarantee deposit return mode for the recycling of the recyclable container is provided, which is not only favorable for strengthening the return enthusiasm and the return awareness of the user, but also can bring certain incomes to the operation management system.

In yet another optional embodiment, as shown in Fig. 7, the apparatus for intelligently controlling the circulation of the recyclable container may further include:
a third determination module 615, configured to determine, according to the type parameters, a return type that the owner returns the target container after the second detection module 604 detects that the target container is placed at the specified recycling position, and determine, according to the return type, a guarantee deposit calculation mode matched with the return type, wherein the return type is an after-use return type or not-use return type, the after-use return type being configured to denote that the owner rents the target container in a renting manner or uses the target container by purchasing goods accommodated in the target container, and the not-use return type denoting that the owner neither rents the target container in the renting manner, nor uses the target container by purchasing the goods accommodated in the target container.

A mode for calculating the target guarantee deposit matched with the type data by the calculation module 605 is specifically to:
calculate the target guarantee deposit matched with the type data according to the guarantee deposit calculation mode matched with the return type.

It can be seen that implementation of the apparatus for intelligently controlling circulation of the recyclable container, which is described in Fig. 7, can also provide diversified guarantee deposit calculation modes. Different guarantee deposit calculation modes are set for users of different return types, so that it is favorable for further strengthening the return enthusiasm and the return awareness of the user, and the circulation of the recyclable container is guaranteed; and the use ratio of the recyclable container is then increased.

In another optional embodiment, as shown in Fig. 7, the apparatus for intelligently controlling the circulation of the recyclable container may further include:
a state determination module 616, configured to determine, according to the container parameters, a latest determined state of the target container after the first detection module 601 detects that the container return verification request is received.

The identification module 602 is specifically configured to identify, according to the container parameters, the type data when the first detection module 601 detects that the container return verification request is received and when the latest determined state determined by the state determination module 616 denotes that the target container has been supplied to a consumer.

A rights protection module 617 is configured to acquire source information of the target container supplied by the owner when the latest determined state determined by the state determination module 616 does not denote that the target container has been supplied to the consumer, and transmit the source information to a product manufacturer corresponding to the target container and/or the container manufacturer corresponding to the target container.

It should be noted that the operation of the above state determination module 616 for determining, according to the above container parameters, the latest determined state of the target container may also specifically be executed after the second judgment module 612 determines that the current return state of the target container is the to-be-recycled state; or, after the latest determined state determined by the state determination module 616 denotes that the target container has been supplied to the consumer, the operation of the first determination module 611 for determining, according to the container parameters, the current return state of the target container may also be triggered. The embodiments of the present invention do not limit it.

It can be seen that by implementation of the apparatus for intelligently controlling circulation of the recyclable container, which is described in Fig. 7, the mode for identifying, according to the container parameters, the type data of the target container only after it is determined that the target container has been supplied to the consumer can reduce unnecessary identification operations and improve the recycling reliability. Furthermore, when it is determined that the target container has not been supplied to the consumer if the owner returns the target container, it is preliminarily considered that there is a fake and shoddy situation, and then the source information of the target container is collected and transmitted to the product manufacturer corresponding to the target container and/or the container manufacturer corresponding to the target container, so as to crack down on fake and shoddy behaviors; and ways to protect the rights are added, which are favorable for protecting the legitimate rights and interests of the product manufacturer corresponding to the target container and/or the container manufacturer corresponding to the target container.

### Embodiment IV

Referring to Fig. 8, Fig. 8 is a schematic structural diagram of another apparatus for intelligently controlling circulation of a recyclable container, which is disclosed by the embodiments of the present invention. As shown in Fig. 8, the apparatus for intelligently controlling circulation of the recyclable container may include:
a memory 801, storing executable program codes;
a processor 802, coupled to the memory801;
the processor 802 calls the executable program codes stored in the memory 801 to implement the steps in the method for intelligently controlling circulation of the recyclable container, which is described in Embodiment I or Embodiment II of the present invention.

### Embodiment V

The embodiments of the present invention disclose a computer storable medium. The computer storable medium stores computer instructions; and the computer instructions are configured to, when called, implement the method for intelligently controlling circulation of the recyclable container, which is described in Embodiment I or Embodiment II of the present invention.

### Embodiment VI

The embodiments of the present invention disclose a computer program product. The computer program product includes a non-transient computer-readable storage medium that stores computer programs, and the computer programs are operated to cause a computer to execute the steps in the method for intelligently controlling circulation of the recyclable container, which is described in Embodiment I or Embodiment II of the present invention.

The apparatus embodiments described above are only illustrative, and the modules described as separate components may or may not be physically separated, and the components displayed as modules may or may not be physical modules, that is, they may be located in one place, or may be distributed to multiple network modules. Some or all of the modules may be selected according to actual needs to achieve the objectives of the solutions of the embodiments. Those of ordinary skill in the art can understand and implement the objectives without creative work.

Through the specific descriptions of the above embodiments, those skilled in the art can clearly understand that all the implementation modes can be implemented by means of software and a necessary general hardware platform, and of course, can also be achieved by hardware. Based on this understanding, the above technical solution essentially or the part that contributes to the prior art can be embodied in the form of a software product. The computer software product can be stored in a computer-readable storage medium, and the storage medium includes a read-only memory (ROM), a random access memory (RAM), a programmable read-only memory (PROM), an erasable programmable read-only memory (EPROM), a one-time programmable read-only memory (OTPROM), an electronically-erasable programmable read-only memory (EEPROM), a compact disc read-only memory (CD-ROM), or other optical disk storages, magnetic disk storages, tape storages, or any other computer-readable mediums that can be used to carry or store data.

Finally, it should be noted that the method and apparatus for intelligently controlling the circulation of the recyclable container, which are disclosed by the embodiments of the present invention are only the preferred embodiments of the present invention, and are only used to illustrate the technical solutions of the present invention, but not intended to limit the technical solutions. Although the present invention has been described in detail with reference to the foregoing embodiments, those of ordinary skill in the art should understand that they can still modify the technical solutions described in all the foregoing embodiments, or equivalently replace some of the technical features; and these modifications or replacements do not cause the essence of the corresponding technical solution to deviate from the spirit and scope of the technical solutions of the various embodiments.

## Claims

1. A method for intelligently controlling circulation of a recyclable container, **characterized by** comprising:
detecting whether a container return verification request is received, wherein the container return verification request is triggered when an owner needs to return a target container, the target container is a recyclable container, and the container return verification request comprises container parameters used for identifying type data of the target container; and
identifying, according to the container parameters, the type data when the container return verification request is received, and verifying the type data; detecting whether the target container is placed at a specified recycling position when the verification succeeds; and calculating a target guarantee deposit matched with the type data when the target container is detected to be placed at the specified recycling position, and granting the target guarantee deposit to the owner.

2. The method for intelligently controlling circulation of the recyclable container according to claim 1, **characterized in that** the container parameters comprise at least one of the shape of the target container, the weight of the target container, the size of the target container, the volume of the target container, the material of the target container, the brand logo of the target container, the unique identifier of the target container, the type integrity of the target container, and embedded data of the target container.

3. The method for intelligently controlling circulation of the recyclable container according to claim 1 or 2, **characterized in that** before granting the target guarantee deposit to the owner, the method further comprises:
acquiring face data of the owner, and determining whether certain face data matched with the face data of the owner is present in a pre-stored face database; and triggering the operation of granting the target guarantee deposit to the owner when the certain face data is determined to be present in the face database, wherein the face database is configured to store all pieces of face data of bound accounts, and each piece of face data corresponds to at least one bound account;
the step of granting the target guarantee deposit to the owner comprises:
granting the target guarantee deposit to one of the bound accounts corresponding to the certain face data matched with the face data of the owner;
and the method further comprises:
adding the face data of the owner and the determined at least one account of the owner into the face database to realize binding between the face data of the owner and the at least one account of the owner when the certain face data is not present, and triggering the operation of granting the target guarantee deposit to the owner, wherein the at least one account of the owner is a bound account corresponding to the face data of the owner.

4. The method for intelligently controlling circulation of the recyclable container according to claim 1, **characterized in that** the method further comprises:
updating a current return state of the target container to a recycled to-be-cleaned state when the target container is determined to be placed at the specified recycling position;
and after receiving the container return verification request, and before identifying, according to the container parameters, the type data, the method further comprises:
determining, according to the container parameters, the current return state of the target container, and determining whether the current return state of the target container is a to-be-recycled state; and triggering the operation of identifying, according to the container parameters, the type data when the current return state of the target container is the to-be-recycled state.

5. The method for intelligently controlling circulation of the recyclable container according to claim 1, **characterized in that** after receiving the container return verification request, and before identifying, according to the container parameters, the type data, the method further comprises:
determining, according to the container parameters, a latest determined state of the target container, determining whether the latest determined state denotes that the target container has been supplied to a consumer, and triggering the operation of identifying, according to the container parameters, the type data when the latest determined state is determined to denote that the target container has been supplied to the consumer;
wherein the method further comprises:
acquiring source information of the target container supplied by the owner when the latest determined state is determined to not denote that the target container has been supplied to the consumer, and transmitting the source information to a product manufacturer corresponding to the target container and/or a container manufacturer corresponding to the target container.

6. The method for intelligently controlling circulation of the recyclable container according to any one of claims 1 to 5, **characterized in that** after calculating the target guarantee deposit matched with the type data, the method further comprises:
determining, according to the container parameters, a manufacturer account corresponding to the target container, wherein the manufacturer account is at least one of an account corresponding to the product manufacturer corresponding to the target container and an account corresponding to a distributor that conducts sales/renting activities on the target container; and
deducting the target guarantee deposit and/or a return service fee for the target container from the manufacturer account.

7. The method for intelligently controlling circulation of the recyclable container according to claim 1, **characterized in that** after the target container is detected to be placed at the specified recycling position, the method further comprises:
determining, according to the type parameters, a return type that the owner returns the target container, wherein the return type is an after-use return type or not-use return type, the after-use return type is configured to denote that the owner rents the target container in a renting manner or uses the target container by purchasing goods accommodated in the target container, and the not-use return type denotes that the owner neither rents the target container in the renting manner, nor uses the target container by purchasing the goods accommodated in the target container;
determining, according to the return type, a guarantee deposit calculation mode matched with the return type;
wherein the step of calculating the target guarantee deposit matched with the type data comprises:
calculating, according to the guarantee deposit calculation mode matched with the return type, the target guarantee deposit matched with the type data.

8. An apparatus for intelligently controlling circulation of a recyclable container, **characterized by** comprising:
a first detection module, configured to detect whether a container return verification request is received, wherein the container return verification request is triggered when an owner needs to return a target container, the target container is a recyclable container, and the container return verification request comprises container parameters used for identifying type data of the target container;
an identification module, configured to identify, according to the container parameters, the type data when the first detection module detects that the container return verification request is received;
a verification module, configured to verify the type data;
a second detection module, configured to detect whether the target container is placed at a specified recycling position when the verification module successfully verifies the type data;
a calculation module, configured to calculate a target guarantee deposit matched with the type data when the second detection module detects that the target container is placed at the specified recycling position; and
a granting module, configured to grant the target guarantee deposit to the owner.

9. An apparatus for intelligently controlling circulation of a recyclable container, **characterized by** comprising:
a memory, storing executable program codes;
a processor, coupled to the memory; and
the processor calls the executable program codes stored in the memory to implement the method for intelligently controlling circulation of the recyclable container according to any one of claims 1 to 7.

10. A computer storable medium, **characterized in that** the computer storable medium stores computer instructions; and the computer instructions are configured to, when called, implement the method for intelligently controlling circulation of the recyclable container according to any one of claims 1 to 7.
